# EUROPEAN PATENT SPECIFICATION

(11) **EP 4 006 887 B1**
(45) Date of publication and mention of the grant of the patent: **09.04.2025**
(21) Application number: 20942143.7
(22) Date of filing: 27.11.2020
(51) Int. Cl.: G09F 9/30, G06F 1/16, H04M 1/02

(54) **DOUBLE-SIDED DISPLAY APPARATUS**
DOPPELSEITIGE ANZEIGEVORRICHTUNG
APPAREIL D'AFFICHAGE DOUBLE FACE

(30) Priority: 24.06.2020 CN 202010590544
(43) Date of publication of application: 01.06.2022
(73) Proprietor: Wingtech Technology (Shenzhen) Co., Ltd., Shenzhen, Guangdong 518001 (CN)
(72) Inventor: TENG, Wencheng, Shenzhen, Guangdong 518001 (CN)
(74) Representative: Grünecker Patent- und Rechtsanwälte PartG mbB
(86) International application number: PCT/CN2020/132052
(87) International publication number: WO 2021/258633

(56) References cited:
- CN-A- 109 147 571
- CN-A- 109 147 571
- CN-A- 109 859 635
- CN-A- 110 491 289
- CN-A- 110 491 289
- CN-A- 110 868 486
- CN-A- 111 309 103
- CN-A- 111 710 241
- CN-U- 203 759 584
- KR-B1- 101 107 127
- US-A1- 2013 201 208

## Description

### TECHNICAL FIELD

The present disclosure relates to the technical field of display, and more particularly, to a double-sided display device.

### BACKGROUND

Smart terminals have been widely used in daily life, and users can get more information through the smart terminals. Moreover, in order to increase screen areas of the smart terminals, flexible screens with better flexibility are used in more smart terminals.

In the related art, screen folding is the general way to change the screen areas of the smart terminals. A housing of the smart terminal is divided into a first housing and a second housing. The first housing and the second housing can be folded and extended by a bending structure arranged therebetween, and a flexible screen covers an upper surface of the first housing and an upper surface of the second housing. When a screen with a larger area is needed, the first housing or the second housing is bent, so that the upper surface of the first housing and the upper surface of the second housing are in the same horizontal plane and in an extended state. In this case, the whole flexible screen can be used to display images. When a screen with a smaller area is needed, the first housing or the second housing is bent, so that the first housing is located below the second housing and in a folded state. In this case, a part of the flexible screen located on the upper surface of the second housing in the entire flexible screen can display images.

However, the related art only covers two cases of the screen area of the smart terminal, one is the area of the whole flexible screen, and the other is the area of a half flexible screen, which leads to lower flexibility of adjusting the screen area of the smart terminal and smaller application range.

CN 110491289 A discloses a display device comprising a shell and a single flexible display panel, wherein the flexible display panel can be partially or completely exposed out of the shell, and can be bent to the back side of the shell in order to achieve independent displays on both the front and back side of the shell. CN109147571 discloses a double-sided display device according to the preamble of claim 1.

### SUMMARY

The present disclosure provides a double-sided display device, which improves the flexibility of adjusting a display area, enlarges an application range of the double-sided display device, and is convenient for users to use.

A double-sided display device includes:
a housing, including a first housing and a second housing slidingly connected with the first housing;
a first flexible screen having a first display surface facing one side, one end of the first flexible screen being connected in the first housing and the other end being wound in the second housing;
a second flexible screen arranged opposite to the first flexible screen and having a second display surface facing the other side, one end of the second flexible screen being fixed in the second housing, and the other end being wound in the first housing; and
a flexible screen drive part, the flexible screen drive part being configured for driving winding parts of the first flexible screen and the second flexible screen to wind when the second housing slides relative to the first housing, so as to change a display area.

Optionally, a housing drive part is further included, wherein the housing drive part is configured for driving the second housing to slide relative to the first housing.

Optionally, the housing drive part includes a housing drive motor and a rack assembly driven to slide by the housing drive motor.

Optionally, the rack assembly includes a fixed seat, a first rack, a second rack and a gear meshed with the first rack and the second rack simultaneously, the fixed seat is fixed to the first housing, the first rack and the second rack are both slidably arranged on the fixed seat, and the second rack is connected with the second housing, and the housing drive motor is connected with the first rack and configured for driving the first rack to slide.

Optionally, the flexible screen drive part includes first roll shafts and a flexible screen drive motor configured for driving the first roll shafts to rotate, and the other end of the first flexible screen is wound on the two first roll shafts.

Optionally, the flexible screen drive part further includes a second roll shaft, the other end of the second flexible screen is wound on the second roll shaft, and the flexible screen drive motor is further configured for driving the second roll shaft to rotate.

Optionally, the flexible screen drive part further includes a roller, the roller is located between the first flexible screen and the second flexible screen, and teeth are evenly distributed on an outer side of the roller in a circumferential direction; an inner side of the first flexible screen is provided with a plurality of first tooth sockets, the teeth are meshed with the first tooth sockets, and the flexible screen drive motor is further configured for driving the roller to rotate.

Optionally, an inner side of the second flexible screen is provided with a plurality of second tooth sockets, and the teeth can be meshed with the second tooth sockets.

Optionally, an elastic structure and two fixing structures are further included, wherein the elastic structure and the two fixing structures are all located between the first flexible screen and the second flexible screen, two ends and a middle of the elastic structure are spiral, and one end of the elastic structure is arranged on the first flexible screen through one of the fixing structures, and the other end of the elastic structure is arranged on the second flexible screen through the other of the fixing structures.

Optionally, a control switch fixed on the housing is further included, wherein the control switch is connected with the flexible screen drive motor, and is configured for controlling the flexible screen drive motor to be enabled and stopped.

Optionally, one end of the first flexible screen is wound in the first housing.

According to the double-sided display device provided by the present disclosure, double-sided display of the double-sided display device is implemented by arranging the first flexible screen and the second flexible screen on the front and rear sides of the housing respectively, so that the display area of the double-sided display device is increased; the second flexible screen is driven to be extended by the housing drive part, and the first flexible screen is driven to be extended by the flexible screen drive part, so that the display area of the double-sided display device can be controlled, and thus, the display area of the double-sided display device can have various situations, which improves the flexibility of adjusting the display area of the double-sided display device, enlarges an application range of the double-sided display device, and is convenient for users to use.

### BRIEF DESCRIPTION OF THE DRAWINGS

FIG. 1 is a schematic structural diagram of a double-sided display device provided by an embodiment of the present disclosure;
FIG. 2 is a schematic diagram of a decomposition structure of a double-sided display device provided by an embodiment of the present disclosure;
FIG. 3 is a schematic diagram of of a decomposition structure of another double-sided display device provided by an embodiment of the present disclosure;
FIG. 4 is a front view of a double-sided display device provided by an embodiment of the present disclosure;
FIG. 5 is a sectional view A-A shown in FIG. 4 of the present disclosure;
FIG. 6 is a sectional view B-B shown in FIG. 4 of the present disclosure;
FIG. 7 is a schematic diagram of of a double-sided display device that does not include a first flexible screen provided by an embodiment of the present disclosure;
FIG. 8 is a schematic structural diagram of a first flexible screen, a roller and a first roll shaft provided by an embodiment of the present disclosure;
FIG. 9 is an enlarged schematic diagram of a position C shown in FIG. 8 of the present disclosure;
FIG. 10 is a rear view of a double-sided display device provided by an embodiment of the present disclosure;
FIG. 11 is a reference diagram of a usage state of a double-sided display device provided by an embodiment of the present disclosure; and
FIG. 12 is a reference diagram of a usage state of another double-sided display device provided by an embodiment of the present disclosure.

In the drawings:
1 refers to housing; 11 refers to first housing; 12 refers to second housing; 2 refers to first flexible screen; 21 refers to first tooth socket; 3 refers to second flexible screen; 4 refers to housing drive part; 41 refers to fixed seat; 42 refers to first rack; 43 refers to second rack; 44 refers to gear; 45 refers to housing drive motor; 5 refers to flexible screen drive part; 51 refers to first roll shaft; 52 refers to flexible screen drive motor; 53 refers to second roll shaft; 54 refers to roller; 541 refers to tooth; 6 refers to elastic structure; 7 refers to fixing structure; 8 refers to control switch; 9 refers to braced frame; and 10 refers to camera module.

### DETAILED DESCRIPTION

The technical solutions of the present disclosure will be described with reference to the accompanying drawings and through the embodiments hereinafter. The embodiments described herein are merely illustrative of the present disclosure and are not intended to limit the present disclosure. For ease of description, the accompanying drawings only show the parts related to the present disclosure, but not all of the present disclosure.

This embodiment provides a double-sided display device, the two sides of which are both provided with a flexible screen, and display areas of the flexible screens at the two sides can be adjusted, so that the double-sided display device has higher flexibility.

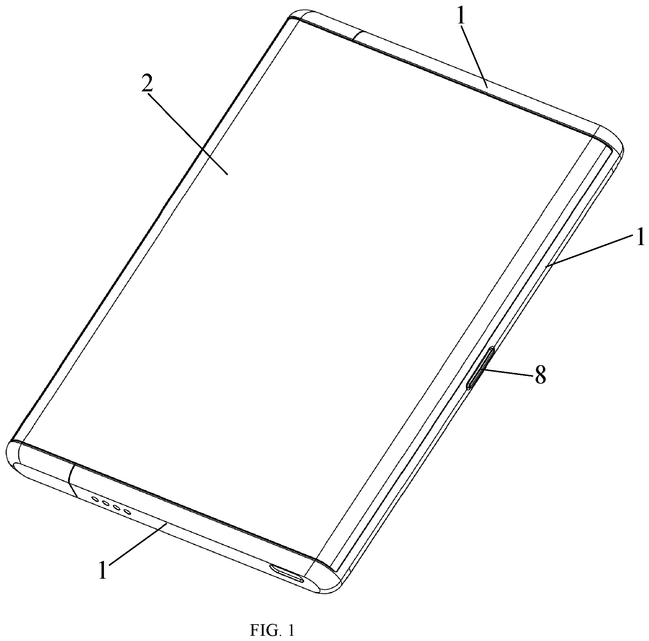

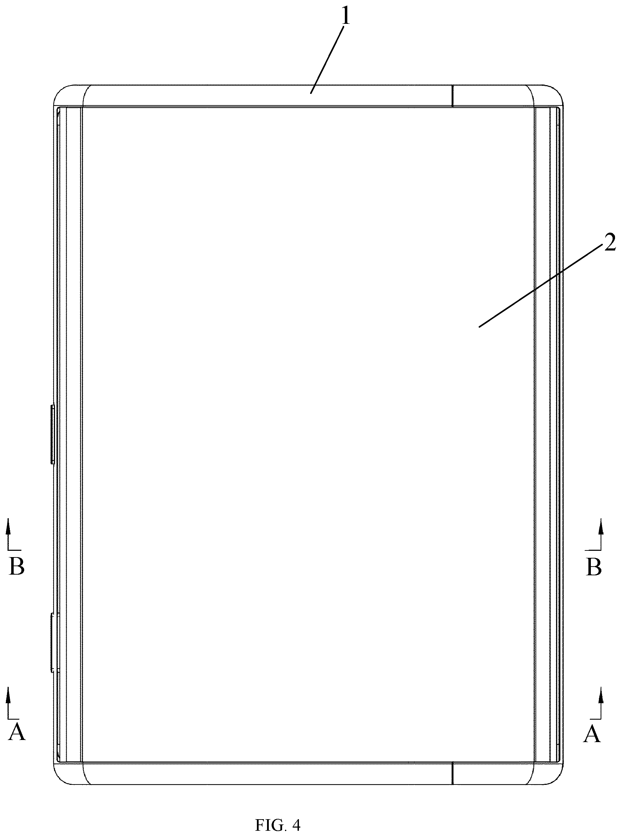

As shown in FIG. 1 to FIG. 12, the double-sided display device includes a housing 1, a first flexible screen 2 configured for displaying in a front side of the housing 1, a second flexible screen 3 configured for displaying in a rear side of the housing 1, and a flexible screen drive part 5 configured for driving the first flexible screen 2 to be extended.

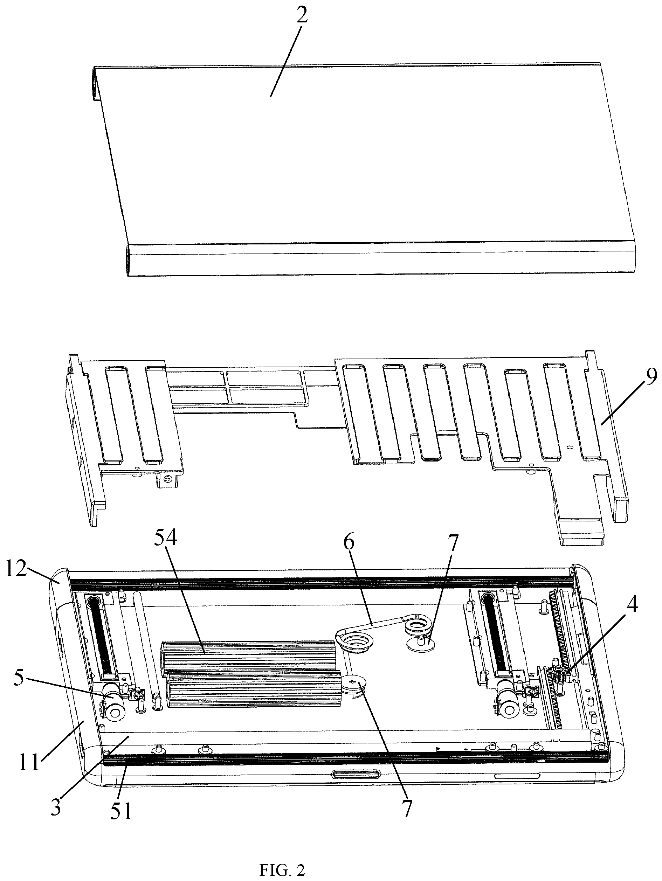

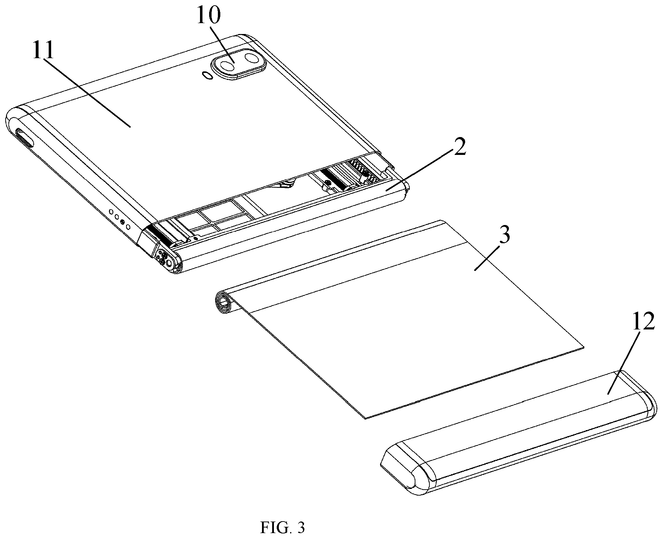

As shown in FIG. 3, the housing 1 includes a first housing 11 and a second housing 12 slidingly connected with the first housing 11. The first flexible screen 2 has a first display surface facing one side of the housing 1, the first flexible screen 2 is located at a front side of the double-sided display device, and one end of the first flexible screen 2 is connected in the first housing 11 and the other end of the first flexible screen 2 is wound in the second housing 12. In other words, the first flexible screen 2 includes a flat part tiled on one side of the first housing 11 and a winding part wound in the second housing 12. The second flexible screen 3 is arranged opposite to the first flexible screen 2, and has a second display surface facing the other side of the housing 1, the second flexible screen 3 is located at a rear side of the double-sided display device, one end of the second flexible screen 3 is fixed in the second housing 12, and the other end of the second flexible screen 3 is wound in the first housing 11. In other words, the second flexible screen 3 also includes a winding part, and the winding part of the second flexible screen 3 is located in the first housing 11. The second display surface and the first display surface can display the same image, or the second display surface and the first display surface can also display different images. Optionally, a bottom wall of the first housing 11 may also be provided with a camera module 10. As shown in FIG. 2, the flexible screen drive part 5 is located in the first housing 11, and is close to a left end of the first housing 11. The flexible screen drive part 5 is configured for driving the winding parts of the first flexible screen 2 and the second flexible screen 3 to wind and unwind when the second housing 12 slides relative to the first housing 11, so as to change a display area. In addition, because one end of the second flexible screen 3 is fixed in the second housing 12, when the second housing 12 slides, one end of the second flexible screen 3 can be driven to move, so that the winding part of the second flexible screen 3 can be wound and unwound, that is, the second housing 12 and the flexible screen drive part 5 can simultaneously drive the winding part of the second flexible screen 3 to wind.

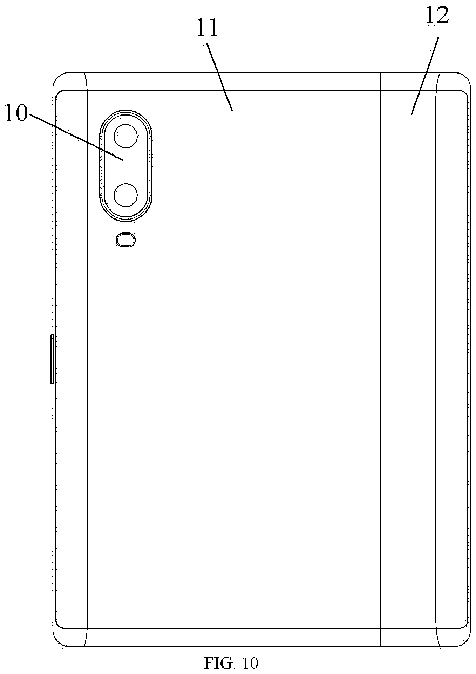

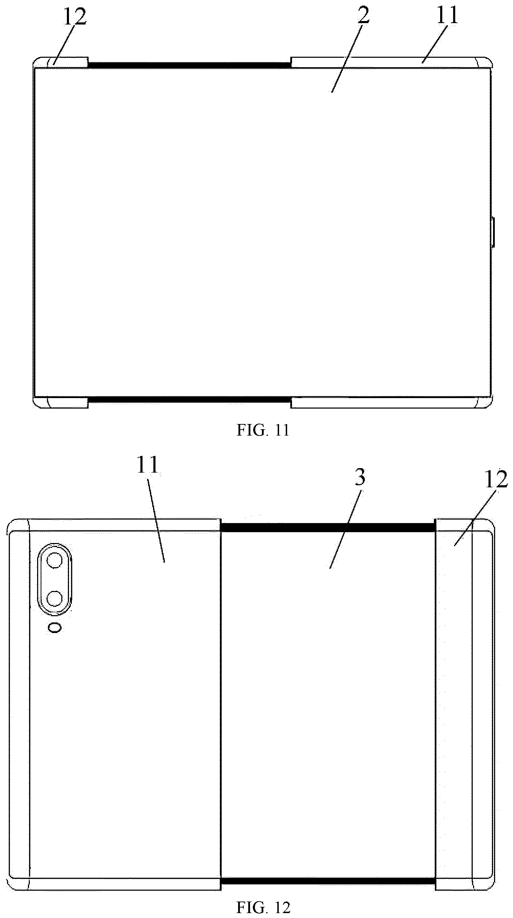

The double-sided display device provided by this embodiment has a plurality of display states, which are respectively a normal display state, an extended display state and a transitional display state between the two display states. When the double-sided display device is in the normal display state, the flat part of the first flexible screen 2 on the front side of the housing 1 is exposed and used to display images (as shown in FIG. 1), while the second flexible screen 3 on the rear side of the housing 1 is not exposed out of the housing 1, that is, the second flexible screen 3 is shaded by the first housing 11 and the second housing 12 (as shown in FIG. 10) and cannot display images. When the double-sided display device is in the extended display state, the flat part of the first flexible screen 2 on the front side of the housing 1 and a part of the winding part are both exposed out of the housing 1 and used to display images (as shown in FIG. 11). In this case, the display area is larger, and the part of the second flexible screen 3 on the rear side of the housing 1 is exposed out of the housing 1, and can be used to display images (as shown in FIG. 12), which increases the display area of the double-sided display device. When the double-sided display device is in the transitional display state, the display area of the double-sided display device is between the display area in the normal display state and the display area in the extended display state.

When it is necessary to control the double-sided display device to change from a normal display state to an extended display state, the second housing 12 is driven to slide away from the first housing 11 first, so that the second housing 12 can pull the second flexible screen 3 to extend, which is, to pull the winding part of the second flexible screen 3 to unwind, and meanwhile, drive the winding parts of the first flexible screen 2 and the second flexible screen 3 to unwind through the flexible screen drive part 5, so that a second part of the first flexible screen 2 is extended. In this process, the action of the flexible screen drive part 5 may be stopped at any time to obtain a corresponding display area of the first flexible screen 2 and a corresponding display area of the second flexible screen 3 as needed. In this embodiment, the second housing 12 can be manually pulled by a user to slide relative to the first housing 11, and the second housing 12 can also be driven to slide relative to the first housing 11 by a driver, which is not limited in this embodiment. According to the double-sided display device provided by the present disclosure, double-sided display of the double-sided display device is implemented by arranging the first flexible screen 2 and the second flexible screen 3 on the front and rear sides of the housing 1 respectively, so that the display area of the double-sided display device is increased; the winding part of the first flexible screen 2 and the second flexible screen 3 are driven to wind and unwind by the housing drive part 5, so that the display area of the double-sided display device can be controlled, and thus, the display area of the double-sided display device can have various situations, which improves the flexibility of adjusting the display area of the double-sided display device, enlarges an application range of the double-sided display device, and is convenient for users to use.

Optionally, as shown in FIG. 2, the double-sided display device may also include a braced frame 9 located in the housing 1, the braced frame 9 is configured for bracing the first flexible screen 2 and the second flexible screen 3, so as to prevent the first flexible screen 2 and the second flexible screen 3 from being excessively bent to affect the use.

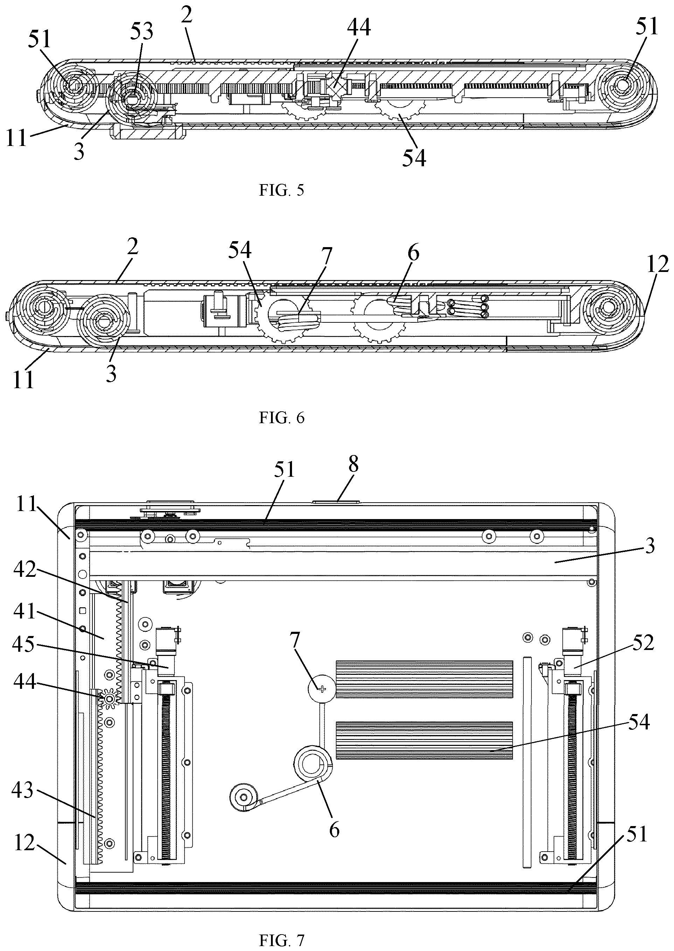

In this embodiment, as shown in FIG. 5 and FIG. 6, one end of the first flexible screen 2 is wound in the first housing 11. In other words, the two ends of the first flexible screen 2 are both provided with a winding part, and one winding part is wound in the first housing 11, and the other winding part is wound in the second housing 12. When the first flexible screen 2 is extended, the two winding parts of the first flexible screen can be extended at the same time, or one of the two winding parts of the first flexible screen 2 is extended and the other one is kept in a wound state, which is not limited in this embodiment.

Optionally, as shown in FIG. 2, the double-sided display device further includes a housing drive part 4 configured for driving the housing 1 to extend. In an embodiment, the housing drive part 4 is fixedly connected with the second housing 12 and is configured for driving the second housing 12 to slide relative to the first housing 11. The housing drive part 4 can drive the second housing 12 to slide close to or away from the first housing 11.

In an embodiment, the housing drive part 4 may include a housing drive motor 45 and a rack assembly driven to slide by the housing drive motor 45. The rack assembly is connected with the second housing 12. When the housing drive motor 45 drives the rack assembly to move, the rack assembly can drive the second housing 12 to slide relative to the first housing 11.

Optionally, as shown in FIG. 7, the rack assembly includes a fixed seat 41, a first rack 42, a second rack 43 and a gear 44 meshed with the first rack 42 and the second rack 43 simultaneously. The fixed seat 41 is fixed to the first housing 11, the first rack 42 and the second rack 43 are both slidably arranged on the fixed seat 41, and the second rack 43 is connected with the second housing 12. When the first rack 42 slides in a first direction, the second rack 43 can be driven by the gear 44 to slide in a second direction, so that the second rack 43 drives the second housing 12 to slide in the second direction, and then the second flexible screen 3 can be extended or contracted. The second direction is opposite to the first direction. For example, in FIG. 7, when the first rack 42 moves upward, the second rack 43 moves downward under the action of the gear 44. In this case, the second rack 43 drives the second housing 12 to move downward, so as to be away from the first housing 11, and the second housing 12 pulls one end of the second flexible screen 3 to move downward, so that the winding part of the second flexible screen 3 is unwound, and thus, the second flexible screen 3 is extended. However, the contracted process of the second flexible screen 3 is opposite to this process, and will not be elaborated in this embodiment here.

Optionally, the fixed seat 41 may be provided with a slide track, and bottoms of the first rack 42 and the second rack 43 may be provided with runners which can be slidably arranged on the slide track, so as to realize the sliding of the first rack 42 and the second rack 43 relative to the fixed seat 41, and the slide track can also guide a slide direction of the first rack 42 and the second rack 43.

Optionally, please continuously refer to figure 7. The flexible screen drive part 5 may include two first roll shafts 51 and a flexible screen drive motor 52 for driving the two first roll shafts 51 to rotate. Two ends of the first flexible screen 2 (i.e., two winding parts of the first flexible screen 2) are wound on the two first roll shafts 51 respectively. When the first roll shaft 51 rotates in a first rotation direction, winding of the winding part of the first flexible screen 2 can be realized. When the first roll shaft 51 rotates in a direction opposite the first rotation direction, unwinding of the winding part of the first flexible screen 2 can be realized. Optionally, an outer surface of the first roller shaft 51 may be circumferentially provided with a plurality of bulges to better wind up the first flexible screen 2. The first roll shaft 51 is rotatably connected to the first housing 11, so that one end of the first flexible screen 2 is connected to the first housing 11 through the first roll shaft 51.

For example, the flexible screen drive motor 52 can be connected with the first roll shaft 51 through a conversion structure. The conversion structure is respectively connected with a telescopic end of the flexible screen drive motor 52 and the first roll shaft 51, and is configured for converting linear displacement generated by the telescopic end into rotation. For example, when the telescopic end is extended, the conversion structure can drive the first roll shaft 51 to rotate in the first rotation direction, and when the telescopic end is retracted, the conversion structure can drive the first roll shaft 51 to rotate in the direction opposite to the first rotation direction. Optionally, the conversion structure may be a gear structure with teeth inside and outside, and the telescopic end may be a rack.

In an embodiment, as shown in FIG. 5, the flexible screen drive part 5 may further include a second roll shaft 53. The other end of the second flexible screen 3 (i.e., the winding part of the second flexible screen 3) is wound on the second roll shaft 53. In this case, the flexible screen drive motor 52 is further configured for driving the second roll shaft 53 to rotate, so that the second flexible screen 3 is extended or contracted. Optionally, an outer surface of the second roll shaft 53 may be circumferentially provided with a plurality of bulges to better wind up the second roll shaft 53. Moreover, in order to avoid interference between the movement of the first flexible screen 2 and the second flexible screen 3, the second roll shaft 53 is located between the two first roll shafts 51.

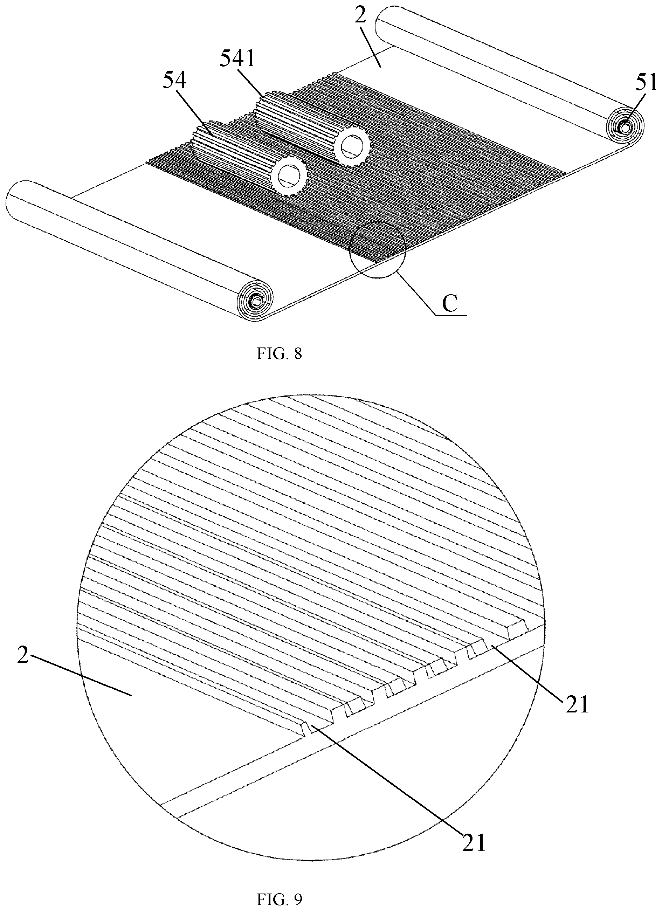

In an embodiment, as shown in FIG. 8, the flexible screen drive part 5 may also include a roller 54. The roller 54 is located between the first flexible screen 2 and the second flexible screen 3, and teeth 541 are evenly distributed on an outer side of the roller 54 in a circumferential direction. An inner side of the first flexible screen 2 (that is, the opposite side of the first display surface) is provided with a plurality of first tooth sockets 21, and the teeth 541 can be meshed with the first tooth sockets 21. The flexible screen drive motor 52 is further configured for driving the roller 54 to rotate, so that when the roller 54 rotates, the first flexible screen 2 can be driven to move by the teeth 541 and the first tooth sockets 21 which are meshed with each other. For example, when the roller 54 rotates along the first rotation direction, the first flexible screen 2 can be driven to move along the first direction. In this case, one winding part of the first flexible screen 2 is unwound. When the roller 54 rotates along a second rotation direction, the first flexible screen 2 can be driven to move along the second direction. In this case, the other winding part of the first flexible screen 2 is unwound. As shown in FIG. 9, the inner side of the first display screen 2 is provided with a plurality of bulge structures, and the plurality of bulge structures is arranged at intervals, and the first tooth socket 21 is formed between two adjacent bulge structures. Optionally, the flexible screen drive part 5 may include a plurality of rollers 54 to improve the stability and reliability when the rollers 54 drive the first flexible screen 2 to move.

Optionally, the inner side of the second flexible screen 3 may be provided with a plurality of second tooth sockets, and the teeth 541 can be meshed with the second tooth sockets. In this case, the roller 54 can also assist the second housing 12 to drive the second flexible screen 3 to move, so as to ensure that the second flexible screen 3 can be extended or contracted.

In this embodiment, as shown in FIG. 2 and FIG. 7, the double-sided display device further includes an elastic structure and two fixing structures 7. The elastic structure 6 and the two fixing structures 7 are all located between the first flexible screen 2 and the second flexible screen 3, and, two ends and a middle of the elastic structure 6 are spiral, and one end of the elastic structure 6 is arranged on the first flexible screen 2 through one of the fixing structures 7, and the other end of the elastic structure 6 is arranged on the second flexible screen 3 through the other of the fixing structures 7. The elastic structure 6 is configured for elastically bracing the first flexible screen 2 and the second flexible screen 3. Moreover, in the extended process of the first flexible screen 2 and the second flexible screen 3, the elastic structure 6 can also control the strength and toughness during extending, and prevent the first flexible screen 2 and the second flexible screen 3 from being damaged due to quick bounce.

In an embodiment, as shown in FIG. 7, the double-sided display device further includes a control switch 8 fixed on the housing 1. The control switch 8 is connected with the housing drive motor 45 and the flexible screen drive motor 52 respectively, and is configured for controlling the housing drive motor 45 and the flexible screen drive motor 52 to be enabled and stopped. Optionally, the control switch may be connected with the housing drive motor 45 and the flexible screen drive motor 52 in a wired or wireless manner, or the control switch may also be connected with the printed circuit board 45 and the flexible screen drive motor 52 through a printed circuit board.

## Claims

1. A double-sided display device, comprising:
a housing (1), comprising a first housing (11) and a second housing (12) slidingly connected with the first housing (11);
a first flexible screen (2) having a first display surface facing one side, one end of the first flexible screen (2) being connected in the first housing (11) and the other end being wound in the second housing (12);
a second flexible screen (3) arranged opposite to the first flexible screen (2) and having a second display surface facing the other side, **characterized by** one end of the second flexible screen (3) being fixed in the second housing (12), and the other end being wound in the first housing (11); and by a flexible screen drive part (5), wherein the flexible screen drive part (5) drives winding parts of the first flexible screen (2) and the second flexible screen (3) to wind when the second housing (12) slides relative to the first housing (11), so as to change a display area.

2. The double-sided display device according to claim 1, further comprising a housing drive part (4), configured for driving the second housing (12) to slide relative to the first housing (11).

3. The double-sided display device according to claim 2, **characterized in that**, the housing drive part (4) comprises a housing drive motor (45) and a rack assembly driven to slide by the housing drive motor (45).

4. The double-sided display device according to claim 3, **characterized in that**, the rack assembly comprises a fixed seat (41), a first rack (42), a second rack (43) and a gear (44) meshed with the first rack (42) and the second rack (43) simultaneously, the fixed seat (41) is fixed to the first housing (11), the first rack (42) and the second rack (43) are both slidably arranged on the fixed seat (41), and the second rack (43) is connected with the second housing (12), and the housing drive motor (45) is connected with the first rack (42) and configured for driving the first rack (42) to slide.

5. The double-sided display device according to any one of claims 2 to 4, **characterized in that**, the flexible screen drive part (5) comprises a first roll shaft (51) and a flexible screen drive motor (52) configured for driving the first roll shaft (51) to rotate, and the other end of the first flexible screen (2) is wound on the first roll shaft (51).

6. The double-sided display device according to claim 5, **characterized in that**, the flexible screen drive part (5) further comprises a second roll shaft (53), the other end of the second flexible screen (3) is wound on the second roll shaft (53), and the flexible screen drive motor is further configured for driving the second roll shaft (53) to rotate.

7. The double-sided display device according to claim 5, **characterized in that**, the flexible screen drive part (5) further comprises a roller (54), the roller (54) is located between the first flexible screen (2) and the second flexible screen (3), and teeth (541) are evenly distributed on an outer side of the roller (54) in a circumferential direction; an inner side of the first flexible screen (2) is provided with a plurality of first tooth sockets (21), the teeth (541) are meshed with the first tooth sockets (21), and the flexible screen drive motor (52) is further configured for driving the roller (54) to rotate.

8. The double-sided display device according to claim 7, **characterized in that**, an inner side of the second flexible screen (3) is provided with a plurality of second tooth sockets, and the teeth (541) are meshed with the second tooth sockets.

9. The double-sided display device according to claim 8, further comprising an elastic structure (6) and two fixing structures (7), wherein the elastic structure (6) and the two fixing structures (7) are all located between the first flexible screen (2) and the second flexible screen (3), two ends and a middle of the elastic structure (6) are spiral, and one end of the elastic structure (6) is arranged on the first flexible screen (2) through one of the fixing structures (7), and the other end of the elastic structure (6) is arranged on the second flexible screen (3) through the other of the fixing structures (7).

10. The double-sided display device according to claim 1, **characterized in that**, one end of the first flexible screen (2) is wound in the first housing (11).

## Patentansprüche

1. Eine doppelseitige Anzeigevorrichtung, aufweisend:
ein Gehäuse (1), umfassend ein erstes Gehäuse (11) und ein zweites Gehäuse (12), das verschiebbar mit dem ersten Gehäuse (11) verbunden ist;
einen ersten flexiblen Bildschirm (2) mit einer ersten Anzeigefläche, die zu einer Seite zeigt, wobei ein Ende des ersten flexiblen Bildschirms (2) mit dem ersten Gehäuse (11) verbunden ist und das andere Ende in das zweite Gehäuse (12) gewickelt ist;
ein zweiter flexibler Bildschirm (3), der gegenüber dem ersten flexiblen Bildschirm (2) angeordnet ist und eine zweite Anzeigefläche aufweist, die der anderen Seite zugewandt ist, **dadurch gekennzeichnet, dass** ein Ende des zweiten flexiblen Bildschirms (3) in dem zweiten Gehäuse (12) befestigt ist und das andere Ende in dem ersten Gehäuse (11) aufgewickelt ist; und durch
ein Antriebsteil (5) für den flexiblen Bildschirm, wobei das Antriebsteil (5) für den flexiblen Bildschirm
die Wicklungsteile des ersten flexiblen Bildschirms (2) und des zweiten flexiblen Bildschirms (3) antreibt, um diese aufzuwickeln, wenn das zweite Gehäuse (12) relativ zum ersten Gehäuse (11) verschoben wird, um so eine Anzeigefläche zu verändern.

2. Die doppelseitige Anzeigevorrichtung gemäß Anspruch 1 umfasst ferner ein Gehäuseantriebsteil (4), das so konfiguriert ist, dass es das zweite Gehäuse (12) antreibt, um dieses relativ zum ersten Gehäuse (11) zu verschieben.

3. Die doppelseitige Anzeigevorrichtung gemäß Anspruch 2, **dadurch gekennzeichnet, dass** das Gehäuseantriebsteil (4) einen Antriebsmotor (45) des Gehäuses und eine Zahnstangenanordnung umfasst, die durch den Antriebsmotor (45) des Gehäuses angetrieben wird, um zu gleiten.

4. Die doppelseitige Anzeigevorrichtung gemäß Anspruch 3, **dadurch gekennzeichnet, dass** die Zahnstangenanordnung einen festen Sitz (41), eine erste Zahnstange (42), eine zweite Zahnstange (43) und ein Zahnrad (44) umfasst, das gleichzeitig mit der ersten Zahnstange (42) und der zweiten Zahnstange (43) in Eingriff steht, wobei der feste Sitz (41) an dem ersten Gehäuse (11) befestigt ist, die erste Zahnstange (42) und die zweite Zahnstange (43) beide verschiebbar auf dem festen Sitz (41) angeordnet sind und die zweite Zahnstange (43) mit dem zweiten Gehäuse (12) verbunden ist und der Antriebsmotor (45) des Gehäuses mit der ersten Zahnstange (42) verbunden und so konfiguriert ist, dass er die erste Zahnstange (42) verschiebt.

5. Die doppelseitige Anzeigevorrichtung gemäß einem der Ansprüche 2 bis 4, **dadurch gekennzeichnet, dass** der Antriebsteil (5) für den flexiblen Bildschirm eine erste Rollenwelle (51) und einen Antriebsmotor (52) für den flexiblen Bildschirm umfasst, der so konfiguriert ist, dass er die erste Rollenwelle (51) in Drehung versetzt, und das andere Ende des ersten flexiblen Bildschirms (2) auf die erste Rollenwelle (51) aufgewickelt ist.

6. Die doppelseitige Anzeigevorrichtung nach Anspruch 5, **dadurch gekennzeichnet, dass** der Antriebsteil (5) für den flexiblen Bildschirm ferner eine zweite Rollenwelle (53) umfasst, wobei das andere Ende des zweiten flexiblen Bildschirms (3) auf die zweite Rollenwelle (53) gewickelt ist und der Antriebsmotor für den flexiblen Bildschirm ferner so konfiguriert ist, dass er die zweite Rollenwelle (53) in Drehung versetzt.

7. Die doppelseitige Anzeigevorrichtung nach Anspruch 5, **dadurch gekennzeichnet, dass** der Antriebsteil (5) für den flexiblen Bildschirm ferner eine Rolle (54) umfasst, wobei die Rolle (54) zwischen dem ersten flexiblen Bildschirm (2) und dem zweiten flexiblen Bildschirm (3) angeordnet ist, und Zähne (541) gleichmäßig auf einer Außenseite der Walze (54) in einer Umfangsrichtung verteilt sind; eine Innenseite des ersten flexiblen Bildschirms (2) mit einer Vielzahl von ersten Zahnsockeln (21) versehen ist, die Zähne (541) mit den ersten Zahnsockeln (21) in Eingriff stehen und der Antriebsmotor (52) für den flexiblen Bildschirm ferner so konfiguriert ist, dass er die Walze (54) in Drehung versetzt.

8. Die doppelseitige Anzeigevorrichtung nach Anspruch 7, **dadurch gekennzeichnet, dass** eine Innenseite des zweiten flexiblen Bildschirms (3) mit einer Vielzahl von zweiten Zahnsockeln versehen ist und die Zähne (541) mit den zweiten Zahnsockeln in Eingriff stehen.

9. Die doppelseitige Anzeigevorrichtung nach Anspruch 8, die ferner eine elastische Struktur (6) und zwei Befestigungsstrukturen (7) umfasst, wobei die elastische Struktur (6) und die zwei Befestigungsstrukturen (7) alle zwischen dem ersten flexiblen Bildschirm (2) und dem zweiten flexiblen Bildschirm (3) angeordnet sind, zwei Enden und eine Mitte der elastischen Struktur (6) spiralförmig sind, und ein Ende der elastischen Struktur (6) an dem ersten flexiblen Bildschirm (2) durch eine der Befestigungsstrukturen (7) angeordnet ist und das andere Ende der elastischen Struktur (6) an dem zweiten flexiblen Bildschirm (3) durch die andere der Befestigungsstrukturen (7) angeordnet ist.

10. Die doppelseitige Anzeigevorrichtung nach Anspruch 1, **dadurch gekennzeichnet, dass** ein Ende des ersten flexiblen Bildschirms (2) in das erste Gehäuse (11) gewickelt ist.

## Revendications

1. Dispositif d'affichage double face comprenant
un boîtier (1), comprenant un premier boîtier (11) et un second boîtier (12) relié de manière coulissante au premier boîtier (11) ;
un premier écran flexible (2) ayant une première surface d'affichage orientée vers un côté, une extrémité du premier écran flexible (2) étant reliée au premier boîtier (11) et l'autre extrémité étant enroulée dans le second boîtier (12) ;
un second écran souple (3) disposé en face du premier écran souple (2) et présentant une seconde d'affichage tournée vers l'autre côté,
**caractérisé par le fait qu'**une extrémité du second écran flexible (3) est fixée dans le second boîtier (12) et que l'autre extrémité est enroulée dans le premier boîtier (11) ; et
par une partie d'entraînement d'écran flexible (5), dans laquelle la partie d'entraînement d'écran flexible (5) entraîne les parties d'enroulement du premier écran flexible (2) et du second écran flexible (3) lorsque le second boîtier (12) glisse par rapport au premier boîtier (11), de manière à modifier une zone d'affichage.

2. Dispositif d'affichage double face selon la revendication 1, comprenant en outre une partie d'entraînement du boîtier (4), configurée pour conduire le second boîtier (12) à glisser par rapport au premier boîtier (11).

3. Dispositif d'affichage double face selon la revendication 2, **caractérisé par le fait que** la partie d'entraînement du boîtier (4) comprend un moteur d'entraînement du boîtier (45) et un ensemble crémaillère que peut faire glisser le moteur d'entraînement du boîtier (45).

4. Dispositif d'affichage double face selon la revendication 3, **caractérisé en ce que** l'ensemble crémaillère comprend un siège fixe (41), une première crémaillère (42), une seconde crémaillère (43) et un engrenage (44) engrené avec la première crémaillère (42) et la seconde crémaillère (43) simultanément, le siège fixe (41) est fixé au premier boîtier (11), la première crémaillère (42) et la seconde crémaillère (43) sont toutes deux disposées de manière coulissante sur le siège fixe (41), et la seconde crémaillère (43) est reliée au second boîtier (12), et le moteur d'entraînement du boîtier (45) est relié à la première crémaillère (42) et configuré pour provoquer le glissement de la première crémaillère (42).

5. Dispositif d'affichage double face selon l'une quelconque des revendications 2 à 4, **caractérisé en ce que** la partie d'entraînement de l'écran flexible (5) comprend un premier arbre de rouleau (51) et un moteur d'entraînement de l'écran flexible (52) configuré pour entraîner en rotation le premier arbre de rouleau (51), et l'autre extrémité du premier écran flexible (2) est enroulée sur le premier arbre de rouleau (51).

6. Dispositif d'affichage double face selon la revendication 5, **caractérisé en ce que** la partie d'entraînement de l'écran flexible (5) comprend en outre un second arbre de rouleau (53), l'autre extrémité du second écran flexible (3) est enroulée sur le second arbre de rouleau (53), et le moteur d'entraînement de l'écran flexible est en outre configuré pour entraîner la rotation du second arbre de rouleau (53).

7. Dispositif d'affichage double face selon la revendication 5, **caractérisé en ce que** la partie d'entraînement de l'écran flexible (5) comprend en outre un rouleau (54), le rouleau (54) est situé entre le premier écran flexible (2) et le second écran flexible (3), et les dents (541) sont réparties uniformément sur un côté extérieur du rouleau (54) dans le sens de la circonférence ; un côté intérieur du premier écran flexible (2) est pourvu d'une pluralité de premières douilles de dents (21), les dents (541) sont engrenées avec les premières douilles de dents (21), et le moteur d'entraînement de l'écran flexible (52) est en outre configuré pour entraîner le rouleau (54) en rotation.

8. Dispositif d'affichage double face selon la revendication 7, **caractérisé par le fait qu'**une face intérieure du second écran flexible (3) est pourvue d'une pluralité de secondes douilles de dents, et que les dents (541) sont engrenées dans les secondes douilles de dents.

9. Dispositif d'affichage double face selon la revendication 8, comprenant en outre une structure élastique (6) et deux structures de fixation (7), la structure élastique (6) et les deux structures de fixation (7) étant toutes situées entre le premier écran flexible (2) et le second écran flexible (3), deux extrémités et un milieu de la structure élastique (6) sont en spirale, et une extrémité de la structure élastique (6) est disposée sur le premier écran flexible (2) à travers l'une des structures de fixation (7), et l'autre extrémité de la structure élastique (6) est disposée sur le second écran flexible (3) à travers l'autre structure de fixation (7).

10. Dispositif d'affichage double face selon la revendication 1, **caractérisé par le fait qu'**une extrémité du premier écran flexible (2) est enroulée dans le premier boîtier (11).
